# EUROPEAN PATENT APPLICATION

(11) **EP 4 356 717 A1**
(43) Date of publication of application: **24.04.2024**
(21) Application number: 23201902.6
(22) Date of filing: 05.10.2023
(51) Int. Cl.: A01D 90/10

(54) **AUTOMATED FILL CONTAINER TO WEIGHT**

(30) Priority: 20.10.2022 US 202217969833
(71) Applicant: Deere & Company, Moline, IL 61265 (US)
(72) Inventor: Wonderlich, Grant J., Mannheim (DE); Waldo, Michael A., Mannheim (DE)
(74) Representative: Holst, Sönke

(57) **Abstract**

One or more techniques and/or systems are disclosed for automating the collection of product harvested from a site, such as grain from a field, and filling truck trailer for transport off site. These techniques can help operations that want to improve efficiency, while reducing field compaction and other issues related to weather or environmental conditions. A predetermined level of product can be identified for the target truck trailer, and an optimized fill method can be determined for filling the truck trailer efficiently using one or more mobile transport containers moving product from the field. A sensor array can detect an amount of the product disposed in the mobile transport container during transfer, and used to fill the mobile transport container to a predetermined level based at least on the optimized fill method. The mobile transport container is then used to fill the target truck-trailer container to its predetermined level.

## Description

### BACKGROUND

In an agricultural setting, harvested product is gathered and collected in the field by a harvester, such as a combine, and the harvester's load is periodically offloaded into a field cart that is hauled by a tractor. Further, the field carts are typically transported to the edge of the field where an over-the-road truck-trailer container waits to receive and haul the aggregated grain from the carts. The trailer container can then haul the grain to a storage or processing facility. Each harvester, grain cart, and on-road trailer container has a target load weight and volume. Further, certain harvesting operations can be impacted by the environmental conditions, such a soil moisture and type of soil, which may be impacted by weight. As such, certain harvesting-related operations in field may have a target weight to mitigate field compaction, to optimize operations, and provide for efficiency.

### SUMMARY

One or more techniques and systems are described herein for to improve loading of grain hauling containers to target load weight, to help evenly distribute loads in a container, and to make it easier for operators to achieve optimal fills on carts and container. Further, the techniques and systems described herein can help operations that want to improve efficiency, while reducing field compaction and other issues related to weather or environmental conditions. Loading operations (e.g., offloading to a target container) rates can be monitored and automatic alerts and/or shut-offs can be provided based on pre-determined threshold levels. Real-time data from the vehicles (e.g., combine, cart, trailer container) can be monitored, including scale weights, flow rates, speed of equipment, and more, to determine when the desired threshold is met. The pre-determined threshold can be adjusted to accommodate target circumstances, and can be automatically adjusted based on the target container into which the product is being loaded.

In one implementation of a method for automatically filling a target container to a desired weight during collection of an agricultural product, a second predetermined level of product can be identified for a target truck-trailer container for hauling the product offsite. Further in this implementation, an optimized fill method for transferring the product from a field from which the product is collected to the target truck-trailer container can be determined using a mobile transport container. Additionally, a sensor array, which detects an amount of the product disposed in the mobile transport container during transfer, can be used to fill the mobile transport container to a first predetermined level based at least on the optimized fill method. In this implementation, the mobile transport container used to fill the target truck-trailer container to the second predetermined level of product for a target truck-trailer container.

To the accomplishment of the foregoing and related ends, the following description and annexed drawings set forth certain illustrative aspects and implementations. These are indicative of but a few of the various ways in which one or more aspects may be employed. Other aspects, advantages and novel features of the disclosure will become apparent from the following detailed description when considered in conjunction with the annexed drawings.

### BRIEF DESCRIPTION OF THE DRAWINGS

FIGURE 1 is a component diagram illustrating one example vehicle which may implement the fill to weight systems and methods described herein.
FIGURE 2 is a component diagram illustrating another example vehicle which may implement the fill to weight systems and methods described herein.
FIGURE 3 is a component diagram illustrating another example vehicle which may implement the fill to weight systems and methods described herein.
FIGURE 4 is a component diagram illustrating one example implementation that may utilize the fill to weight systems and methods described herein.
FIGURE 5 is a flow diagram illustrating one example method for filling a target container to a desired.
FIGURE 6 is a flow diagram that illustrates another example implementation of a method for.
FIGURE 7 is a schematic diagram of an example computer system that can be used to provide computational functionalities associated with methods and systems described herein.

### DETAILED DESCRIPTION

The claimed subject matter is now described with reference to the drawings, wherein like reference numerals are generally used to refer to like elements throughout. In the following description, for purposes of explanation, numerous specific details are set forth in order to provide a thorough understanding of the claimed subject matter. It may be evident, however, that the claimed subject matter may be practiced without these specific details. In other instances, structures and devices are shown in block diagram form in order to facilitate describing the claimed subject matter.

As described herein, a system can be devised that provides for an automatic fill to a target weight of harvested product transferred in-field during a harvesting operation. In one aspect, the system can be used to support automatic retrieval of scale data (e.g., weight) to support target fill weights for target vehicle (e.g., harvesters, field carts, trailer containers, storage facilities, etc.). The example systems can provide information to support in-field decisions by Tractor/Cart operators and Truck/Trailer operators, such as when and how much to fill to meet a pre-determined threshold, to provide for improved scheduling and logistics, etc. Further, the information gathered can be automatically used for after the fact accountability of amount of product. As an example, this may reduce or eliminate manual entry of load weight information, and mitigate overfills, under-fills, and loss of efficiency. That is, in this aspect, truck/trailer container can achieve their target load weight more easily for efficient grain transport. In-field grain carts can be optimally filled to achieve effective and efficient grain transport, and grain load thresholds can be met, such as to mitigate soil compaction or reduce field conditions issues with the transport vehicles.

In some implementations, in this aspect, the system can monitor unloading rates to both the truck container from the grain cart, and to the grain cart from the harvester; or from a storage vehicle to a transport cart, to the target dispersion vehicle (e.g., seeder, chemical sprayer). As an example, an alert can be provided to the operator, and/or the system can automatically shut off the offloading mechanism when targeted or threshold weight is met (e.g., or cart is full, whichever comes first). For example, real-time data from a target vehicle can be used for a scale sensor, which can control the offloading equipment, such as to turn off the loader when a desired target weight is reached. In some implementations, the control of the offloading equipment could be achieved by controlling the loading rate overtime, or the state of the unloading mechanism directly (e.g., on/off). As an illustrative example, a single grain cart can service multiple harvesters operating in the field, and could fill to the same weight each time, regardless of which combine is unloading into the cart. In this example, the target weight may be one specified for that particular cart, for the particular soil conditions, and/or to meet a specific load weight and target load efficiency for a waiting trailer container.

In some implementations, in this aspect, scale weight on a target vehicle (e.g., grain cart, trailer container) can be used to calibrate flow rates coming from the offloading vehicle (e.g., harvester, grain cart). As an example, using the harvester's on-board machine sensors and known state, the harvester auger (e.g., or belt) flow rate can be accurately predicted. For example, data collected from the harvester that may be used to determine the predicted flow rate can include, the on-board tank fill level, harvester mass flow rate into tank, machine attitude (e.g., pitch and roll), engine load, auger power, speed and torque, etc. Further, in this example, the tractor and grain cart sensors may be used to accurately predict flow rate coming into or out of the grain cart. For example, the cart scale weight, machine attitude, PTO speed, torque, engine load, etc., may be used to identify flow rate. In this implementation, the predicted flow rate(s) can be compared with the known scale weight to help calibrate the flow rate for more accurate predictions.

In some aspects the fill to weight system may comprise a plurality of modes. In one implementation, a grain cart monitoring mode may be utilized that comprises several options. In this implementation, for example, an optimized fill level weight for a particular grain cart can be identified. In this example the optimized fill level weight can comprise an integer that is a division of a target truck/trailer's container weight. That is, X number of cart loads can be used to fill the target truck/trailer's container to its target weight, where X is a whole number. In this way, specific carts, with their optimized fill weights, can be automatically associated with target trailers to optimize the loading process. That is, for example, the cart unloads into target truck/trailer, which is coordinated for unload amongst various grain cart operators.

Additionally, as an example in this implementation, individual grain cart loads can be filled to their so called max load, at least until enough grain carts have unloaded or queued to unload into the target truck container to reach target weight. In this example, the last grain cart can have a target fill weight that allows it to meet the target quantity remaining for the trailer container, which may be a partial load for the cart.

In another implementation, a truck/trailer container weight monitoring mode can be utilized. In this implementation, for example, when monitoring truck container weight as each grain cart unloads, the system will, in real time, monitor the aggregate weight of the truck container and alert grain cart operator(s) when full or at least near target weight, or the information can be used to automatically shut off unloading auger into the truck-trailer container.

As another example, a target dispersion vehicle (e.g., or fleet of vehicles), such as a seeder that is planting grains, or a chemical depositing vehicle (e.g., sprayer, fertilizer, etc.) may need to be refilled during operation (e.g., using level sensors). In this example, similar data can be used to identify when the dispersion vehicle has reached a target level of product being dispersed (e.g., low level). An alert can be provided that activates deployment of a mobile transport to move to a product storage (e.g., truck-trailer with product, or storage container) for loading of the product from the product storage to the mobile transport. In this example, the fill-to-weight process can be used to transfer an appropriate amount of product from the storage container to the target dispersion vehicle.

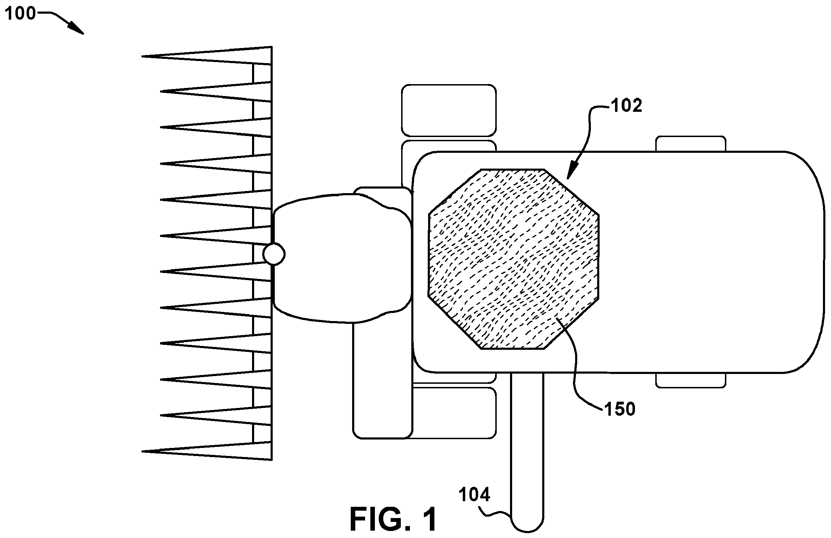

As an illustrative example, FIGURES 1, 2, 3, and 4 illustrate example vehicles and other implementations where the systems and techniques described herein may be implemented. FIGURE 1 illustrates and example harvester 100, such as a combine harvester. The harvester 100 includes an on-board storage container 102 (e.g., a first storage container) that is configured to hold and store a first amount of agricultural product 150. Agricultural products 150, such as grain or the like, is stored in the on-board storage container 102. In some implementations, such as where the harvester 100 is a combine harvester, the on-board storage container 102 stores agricultural products 150 that have been processed by the harvester 100. That is, for example, corn plants, including the cob, can be harvested from the field, and the individual corn kernels are processed from the plant and stored in the on-board storage container 102, at least during ongoing harvesting. Generally, the processed agricultural product 150 is a grain. However, in other implementations, other types of agricultural products, whether processed or unprocessed, can be stored in the on-board storage container 102.

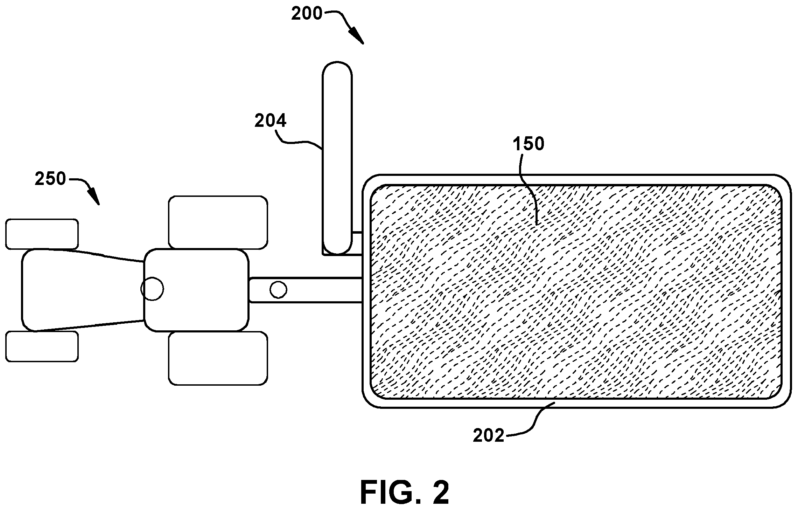

During the course of a harvesting operation, the on-board storage container 102 is filled with the agricultural product 150 harvested from the field. In order to allow for continued harvesting, when the amount of agricultural product 150 in the on-board storage container 102 reaches a pre-selected level, the agricultural product 150 can be offloaded. As illustrated in FIGURE 2, a grain cart 200 can be towed by a tractor 250, and may be used to receive the offloaded agricultural product 150. In other implementations, the grain cart 200 may be self-propelled. Further, the grain cart 200 can comprise a cart storage container 202 (e.g., a second storage container) that is configured to receive and store a second amount (e.g., weight and/or volume) of the agricultural product 150. Typically, the second amount is greater than the first amount (e.g., from the harvester), but in some implementations the second amount can be about the same or less than the first amount.

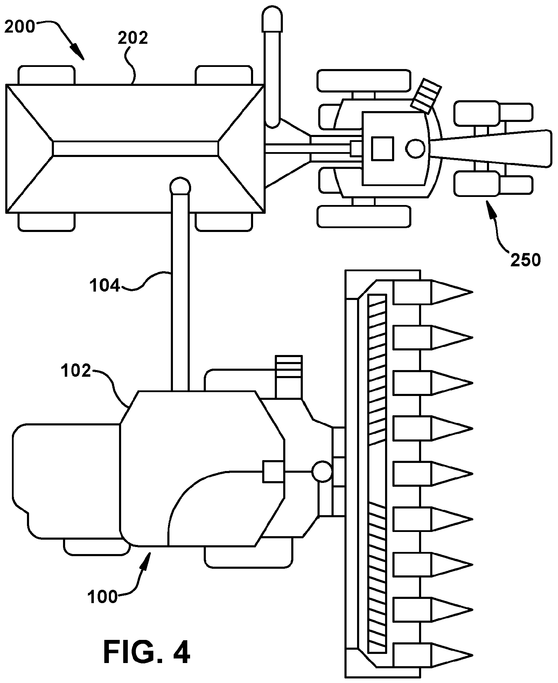

In some implementations, as illustrated in FIGURE 4, the grain cart 200 and tractor 250 can pull alongside the harvester 100 such that the cart storage container 202 is disposed at an outlet of a harvester's on-board product dispenser 104 (e.g., an auger device, a conveyor device, or the like). The on-board product dispenser 104 is configured to transfer product out of the harvester's on-board storage container 102, to its outlet. As such, during an agricultural product 150 transfer, the cart storage container 202 is disposed at the outlet to receive the agricultural product 150.

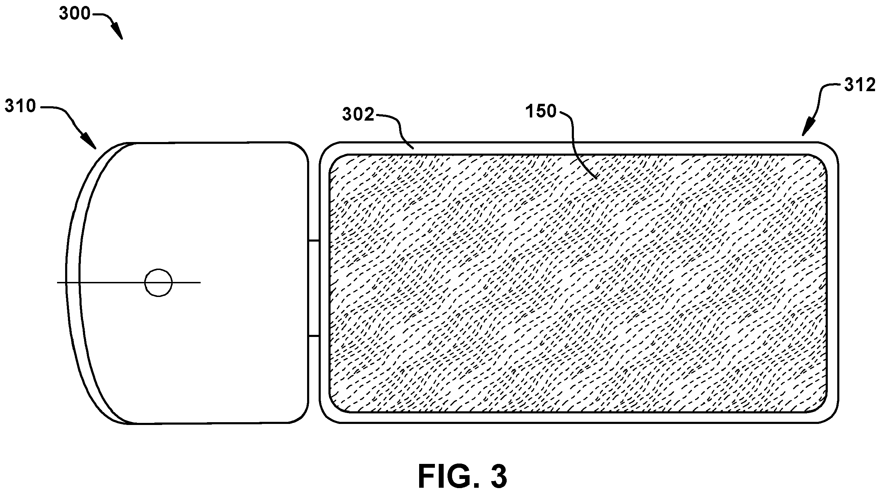

FIGURE 3 illustrates a truck-trailer container 300, which comprises a truck portion 310 and a coupled trailer portion 312, and is typically configured for over-the-road travel for hauling products in bulk. In this example, the truck-trailer container 300 comprises a trailer storage container 302 (e.g., a third storage container) that is configured to receive and store a third amount (e.g., weight and/or volume) of the agricultural product 150. Typically, the third amount is higher than both the first amount (e.g., from the harvester 100) and the second amount (e.g., from the cart 200) in order to collect and haul bulk amounts of the agricultural product 150 from the field.

As an example, much like with the harvester 100 offloading to the cart 200, the cart 200 can offload to the truck-trailer container 300. That is, in this example, the cart comprises a cart product dispenser 204 (e.g., an auger device, a conveyor device, or the like), which is configured to offload product 150 from the cart storage container 202 through a cart dispenser outlet. As such, for a product transfer, the cart 200 can be pulled up alongside the truck-trailer container 300, such that the outlet of the cart product dispenser 204 is aligned with the trailer storage container 302. In this way, the agricultural product 150 can be transferred from the cart storage container 202 to the trailer storage container 302.

As an example, as described above, the agricultural product in the mobile storage container (e.g., grain cart) is unloaded into truck-trailer containers for over-the-road transport (e.g., to a storage or processing facility). Truck-trailer containers and/or mobile storage container may have loading limits based on carrying capacity of the vehicle, road weight restrictions, field conditions, environmental conditions, etc. As such, the amount of agricultural product transferred to the mobile storage container and from the mobile storage container to the truck-trailer container can be limited based on these load limits, which can help determine the number of mobile storage container fills, and the amount filled in each one. In some implementations, the mobile storage container may be transported over a road. In these implementations, the weight of the agricultural product in the mobile storage container may be limited to that of the road weight restrictions, or filed conditions when transported over a field, or limits of the vehicle itself. Further, the site on which the collection and transfer of product may have soil conditions that merit reduction of weight, such as to mitigate soil compaction. In this example, the fill level, or first predetermined level can be determined based on soil conditions and amount of soil compaction reduction desired. Thus, an amount of agricultural material transferred from the harvester to the mobile storage container, the number of grain carts in operation, and the amount of material transferred from the mobile storage container to the truck-trailer container can be controlled in order, for example, to comply with these loading restrictions.

As an illustrative example, the unloading rates or fill rates to both truck container from grain cart and grain cart from combine can be monitored, and may be pre-set based on known weight limits, and other conditions, such as provided by the operator or automatically based on known data. In some implementations, an alert can be provided to an operator, or the transfer can automatically shut off when targeted weight is met or the cart is full, whichever comes first. Further, real-time data can be used from a vehicle with a scale sensor to control the unloading equipment in order to turn off the transfer when a desired target weight is reached. For example, this could be achieved by controlling the rate over time, or controlling the state of the unloading mechanism directly. For example, a single grain cart can service multiple combines and routinely fill to a weight regardless of which combine is unloading into the cart. Additionally, a scale weight on grain cart can be used to calibrate the flow rate coming out of a combine. In this example, combine machine sensors and its state can be used to accurately predict combine auger flow rate. This may include, but is not limited to, a combine tank fill level, combine mass flow rate into tank, machine attitude (pitch and roll), engine load, auger power, speed and torque, etc. For example, tractor and grain cart sensors can be used to accurately predict flow rate coming into or out of the grain cart. This may include, but is not limited to, a scale weight, a machine attitude, PTO speed, torque, engine load, etc.

In some implementations, an inventory of vehicles can be provided, that identifies respective limits and other specifications for each vehicle that is targeted for a particular operation. That is, for example, a farm operation may have a fleet of vehicle available for a target operation (e.g., harvesting, planting, fertilizing, etc.), including harvesters, planters, chemical carts, grain carts, and over-the-road vehicles, etc. In this example, each vehicle may have specifications and limits that may impact the target operation, such as carrying capacity, weight limits, vehicle speed, transfer rates, etc. Further, environmental and site conditions may also have an impact on the target operation, such as soil conditions, type of target product harvested/deposited, weather, etc. In this example, a database can include each vehicle along with their specifications, and/or another database can include the site conditions, target product, and weather predictions. In these implementations, the target operation can be managed and planned using the information provided by these databases. That is, for example, the target operation may have a preferred schedule (e.g., timing), and target size, rate, and other parameters. Using the information provided, the appropriate vehicles may be selected to meet the target parameters, and a target date/time can be selected based on the site conditions, etc. In this way, the efficiency of the target operation can be improved using the conditions and equipment provided.

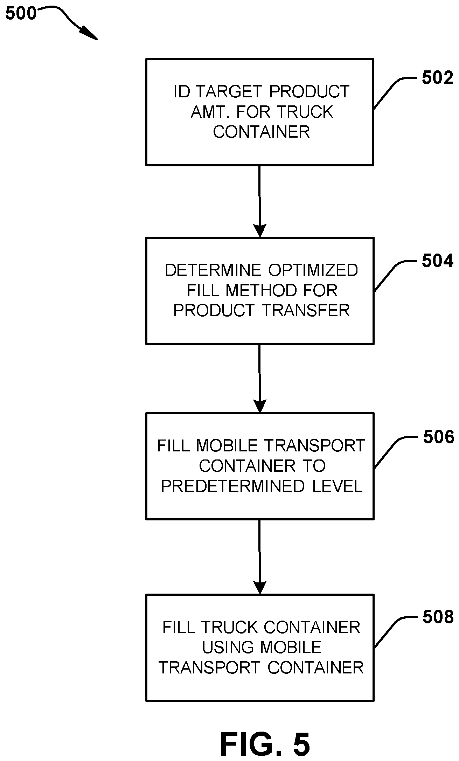

FIGURE 5 is a flow diagram illustrating one example method 500 for automatically filling a target container to a desired weight during collection of an agricultural product. As an example, during harvesting of a grain product, as described above, the grain can be collected by a harvester, offloaded to a grain cart, and loaded onto a truck-trailer carrier for offsite transport (e.g., over the road). In this example method, at 502, a target amount of product for a target truck-trailer container can be identified, for hauling the product offsite. In some implementations, the target amount of product may comprise a target volume or a target weight. As an example, different agricultural products are going to have different weight to volume ratios when stored in a container. As such, some products may utilize a target volume while others may utilize a target weight in order to appropriately fill the target storage container.

At 504, in FIGURE 5, the optimized fill method is determined for the product transfer; that is, one of the preferred fill methods can be selected. In one implementation, the optimized fill method may use a grain cart monitoring mode. As one example, as described above, an optimal single grain cart fill level weight can be identified, which is an integer division of the target truck container weight. As another example, individual grain cart loads can be filled to a mx level until enough grain carts have unloaded or queued to fill the truck container to target weight. In another implementation, the optimized fill method may use a truck container weight monitoring mode. For example, truck container weight can be monitored as each grain cart unloads, and the system can monitor the aggregate weight of the truck container and alert grain cart operator(s) when full or automatically shut off unloading auger.

At 506, The mobile transport container (e.g., grain cart) can be filled to the predetermined level. As an example, the mobile transport container can have a weight sensor (e.g., scale) and/or a volume/level sensor (e.g., optical sensor) that identifies when the weight/volume meets the predetermined level, based at least on the selected optimized fill method.

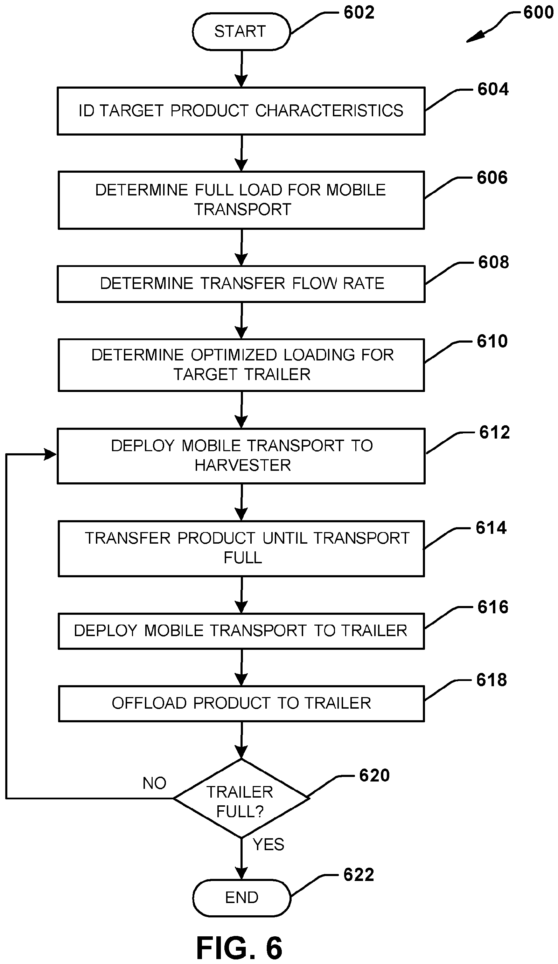

FIGURE 6 is a flow diagram that illustrates another example implementation of a method for using fill levels to manage the transfer of grains from the field to the offsite facility. The exemplary method 600 begins at 602. At 604, target product characteristics are identified. For example, one or more characteristics of the product being transferred to the mobile transport container can be identified, such as moisture level, kernel weight, kernel size, and other characteristics that may alter the weight per volume of the product in the container. In some implementations, the information can be input to a system performing the example method, such as using a Ul terminal operated by an operator. In other implementations, the characteristics information may be collected automatically, such as at the harvester using on-board sensors. As an example, these characteristics may help determine a flow rate, fill rate, and/or predetermined load level.

At 606, the first predetermined level (e.g., fill level or full load level) can be determined for the mobile transport container (e.g., grain cart). As an example, the first predetermined level can comprise a weight limit for the product in the container, and/or can be a volume limit for the product in the container. That is, for example, depending on the characteristics of the product, such as average weight per kernel (e.g., based on moisture level, etc.) and average size of the kernels, a volume limit for a container may comprise different weights. In this example, a container may have a certain weight limit, and/or the operator of the harvesting may have desired soil compaction limits that are directly affected by the weight of container transiting the harvesting site. In some cases, soil conditions may help determine a weight limit, such as in wet conditions, in certain types, and other conditions where it is desirable to mitigate soil compaction (e.g., where soil compaction can lead to poor plant growth, or damage to a site).

Additionally, in some implementations, as described above, determining an optimized fill method for transferring the product from a field comprises determining an efficient fill method, which may result in different predetermined fill levels. As such, in this implementation, a first predetermined level (e.g., container fill level) may be a full weight limit for the container and conditions (e.g., or volume limit), or may be a partially full weight limit or volume limit depending on the optimization method selected for filling a target truck trailer (over-the-road trailer).

At 608, a flow rate for the transfer of the product from the harvester to the mobile container, and/or from the container to the tractor trailer container, can be identified. That is, for example, one or more of the sensors can comprise a scale that identifies the weight of the product as it is transferred into the mobile container and/or the truck trailer. As the product is transferred over time period, the amount of time can be correlated to the weight to identify the flow rate. In some implementations, the identified flow rate con comprise an estimated flow rate, and/or an average flow rate selected from a plurality of flow rate samplings. As an example, flow rate may differ depending on the type of equipment used for the transfer (e.g., auger, conveyor, air flow, etc.), and/or the operation of the equipment (e.g., speed, rate, power, etc.). In some implementations, the determined flow rate can be calibrated accordingly, based on the conditions, type of product, type of equipment, etc., to get a more accurate flow rate. In this way, the flow rate can be used to determine when the transfer has reached the first predetermined fill level. That is, the flow rate (e.g., volume or weight transferred over time) can be used to determine the amount of product transferred.

At 610, the optimized loading method for the loading of the target truck trailer can be identified. As described above, depending on the type and amount of equipment used for a given harvesting site, an optimized method can be selected to provide a more efficient transfer of the product from the field to the truck trailer.

At 612, one or more mobile transport containers (e.g., grain carts) can be deployed into the field to a target harvester. As described above, typically the grain carts are deployed to a harvester when they need to offload their harvest (e.g., when they are approaching full). As an example, this can be timed according to an automated system that detects harvesting rates/levels and deploys the cart automatically, and/or by notifying an operator.

At 614, once the mobile container is aligned with the harvester's transfer system, transfer of the harvested product can commence. In some implementations, the transfer can continue at least until the first predetermined level of product in the mobile container is reached. That is, for example, as described above, the grain is transferred to the mobile cart until the cart is "full." In some implementations, the earlier determined transfer rate can be used to identify when the grain in the cart has reached the first predetermined level, for example, by transferring at the known rate for a known period of time, to reach a known weight and/or volume. In other implementations, one or more sensors (e.g., weight or volume sensors) can be used to determine when the mobile container is "full." In this implementation, once the first predetermined level is reached the transfer can be stopped.

At 614, the mobile transport container can be deployed from the harvester to the truck trailer. As an example, once the transfer is completed a system may provide a notice to an operator to move the container to the location of the truck trailer; or an automated system may automatically move the mobile container from the harvester to the truck trailer. In these implementations, the mobile container can move to a transfer location at the truck trailer, deploy a transfer device, and transfer the product from the mobile container into the truck trailer container, offloading the product at 618. Further, this deployment and offloading of product may be performed by an operator, and/or may be performed automatically by an automated system.

At 620, a product loading system (e.g., comprising a processor and memory with stored instructions that are processed for performing the tasks), and/or an operator, can determine whether the truck trailer container is full, and has reached a second predetermined level. As an example, as described above, the truck trailer is configured for transporting the product over the road (e.g., or similar) to a storage or processing facility. In this example, the truck trailer container can also have a load limit (e.g., weight and/or volume) that limits the amount of product contained therein (e.g., due to vehicle limits, road limits, environmental conditions, soil condition, etc.). As further described above, the optimized loading for the truck trailer can be predetermined, based on the conditions, and once that second predetermined level is reached, the trailer may be considered "full." At 620, if the truck trailer is not full, the mobile transport container can be redeployed to a harvester to collect another load of the product (e.g., full or partial load depending on present fill level of the truck trailer).

Alternately, if the truck trailer is full, the exemplary method 600 can end at 622. As an example, the truck trailer can then be deployed to a processing or storage facility where the product can be offloaded from the truck trailer. Additionally, the amount of product disposed in the truck trailer container can be known, as the amount of product disposed in each mobile transport container is known (e.g., from the know flow rate).

In another implementation, in some situations the operator (e.g., or automated filling system) may have a desired target weight or volume for the target truck/trailer. As an example, target truck/trailer could be capable of carrying a 50,000 Ib load, which may be its high limit. In this example, however, due to some outside conditions, such as road restrictions or environmental conditions, target storage/processing location conditions, etc., the operator (e.g., or system) may request a less than high limit weight, which would be the desired target weight. Similarly, in some implementations, the mobile transport container (e.g., grain cart) could also have a desired target load (e.g., less than "full limit"), and the operator (e.g., or automated system) may communicate this to the harvester, which would then shut off the unloading system (e.g., auger) once the desired setpoint has been reached. In these implementations, the communication of the target or desired weight or volume may be directed from machine to machine (e.g., local area network), from operator to machine, from operator to operator, and from machine to a remote (e.g., cloud) communications network to machine. It is anticipated that various wireless communication pathways could be utilized for this type of communication.

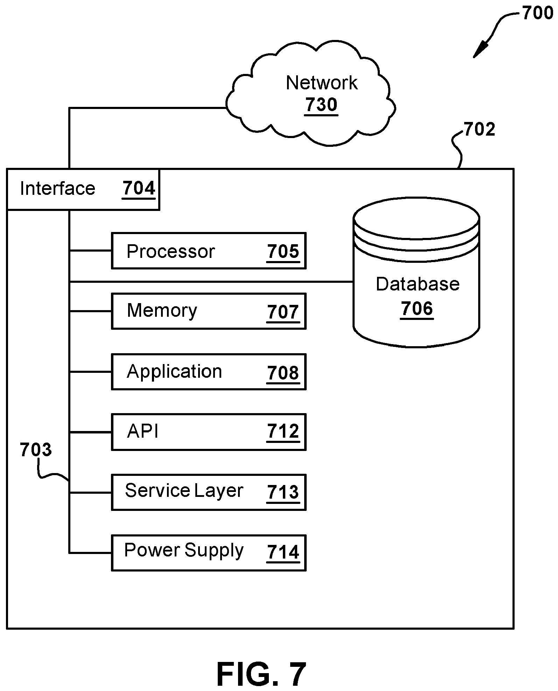

FIGURE 7 is a schematic diagram of an example computer system 700 used to provide computational functionalities associated with described algorithms, methods, functions, processes, flows, and procedures described in the present disclosure, according to some implementations of the present disclosure. The illustrated computer 702 is intended to encompass any computing device such as a server, a desktop computer, a laptop/notebook computer, a wireless data port, a smart phone, a personal data assistant (PDA), a tablet computing device, or one or more processors within these devices, including physical instances, virtual instances, or both. The computer 702 can include input devices such as keypads, keyboards, and touch screens that can accept user information. Also, the computer 702 can include output devices that can convey information associated with the operation of the computer 702. The information can include digital data, visual data, audio information, or a combination of information. The information can be presented in a graphical user interface (Ul) (or GUI).

The computer 702 can serve in a role as a client, a network component, a server, a database, a persistency, or components of a computer system for performing the subject matter described in the present disclosure. The illustrated computer 702 is communicably coupled with a network 730. In some implementations, one or more components of the computer 702 can be configured to operate within different environments, including cloud-computing-based environments, local environments, global environments, and combinations of environments.

At a high level, the computer 702 is an electronic computing device operable to receive, transmit, process, store, and manage data and information associated with the described subject matter. According to some implementations, the computer 702 can also include, or be communicably coupled with, an application server, an email server, a web server, a caching server, a streaming data server, or a combination of servers.

The computer 702 can receive requests over network 730 from a client application (for example, executing on another computer 702). The computer 702 can respond to the received requests by processing the received requests using software applications. Requests can also be sent to the computer 702 from internal users (for example, from a command console), external (or third) parties, automated applications, entities, individuals, systems, and computers.

Each of the components of the computer 702 can communicate using a system bus 703. In some implementations, any or all of the components of the computer 702, including hardware or software components, can interface with each other or the interface 704 (or a combination of both), over the system bus 703. Interfaces can use an application programming interface (API) 712, a service layer 713, or a combination of the API 712 and service layer 713. The API 712 can include specifications for routines, data structures, and object classes. The API 712 can be either computer-language independent or dependent. The API 712 can refer to a complete interface, a single function, or a set of APIs.

The service layer 713 can provide software services to the computer 702 and other components (whether illustrated or not) that are communicably coupled to the computer 702. The functionality of the computer 702 can be accessible for all service consumers using this service layer. Software services, such as those provided by the service layer 713, can provide reusable, defined functionalities through a defined interface. For example, the interface can be software written in JAVA, C++, or a language providing data in extensible markup language (XML) format. While illustrated as an integrated component of the computer 702, in alternative implementations, the API 712 or the service layer 713 can be stand-alone components in relation to other components of the computer 702 and other components communicably coupled to the computer 702. Moreover, any or all parts of the API 712 or the service layer 713 can be implemented as child or sub-modules of another software module, enterprise application, or hardware module without departing from the scope of the present disclosure.

The computer 702 includes an interface 704. Although illustrated as a single interface 704 in FIG. 7, two or more interfaces 704 can be used according to particular needs, desires, or particular implementations of the computer 702 and the described functionality. The interface 704 can be used by the computer 702 for communicating with other systems that are connected to the network 730 (whether illustrated or not) in a distributed environment. Generally, the interface 704 can include, or be implemented using, logic encoded in software or hardware (or a combination of software and hardware) operable to communicate with the network 730. More specifically, the interface 704 can include software supporting one or more communication protocols associated with communications. As such, the network 730 or the interface's hardware can be operable to communicate physical signals within and outside of the illustrated computer 702.

The computer 702 includes a processor 705. Although illustrated as a single processor 705 in FIG. 7, two or more processors 705 can be used according to particular needs, desires, or particular implementations of the computer 702 and the described functionality. Generally, the processor 705 can execute instructions and can manipulate data to perform the operations of the computer 702, including operations using algorithms, methods, functions, processes, flows, and procedures as described in the present disclosure.

The computer 702 also includes a database 706 that can hold data for the computer 702 and other components connected to the network 730 (whether illustrated or not). For example, database 706 can be an in-memory, conventional, or a database storing data consistent with the present disclosure. In some implementations, database 706 can be a combination of two or more different database types (for example, hybrid in-memory and conventional databases) according to particular needs, desires, or particular implementations of the computer 702 and the described functionality. Although illustrated as a single database 706 in FIG. 7, two or more databases (of the same, different, or combination of types) can be used according to particular needs, desires, or particular implementations of the computer 702 and the described functionality. While database 706 is illustrated as an internal component of the computer 702, in alternative implementations, database 706 can be external to the computer 702.

The computer 702 also includes a memory 707 that can hold data for the computer 702 or a combination of components connected to the network 730 (whether illustrated or not). Memory 707 can store any data consistent with the present disclosure. In some implementations, memory 707 can be a combination of two or more different types of memory (for example, a combination of semiconductor and magnetic storage) according to particular needs, desires, or particular implementations of the computer 702 and the described functionality. Although illustrated as a single memory 707 in FIG. 7, two or more memories 707 (of the same, different, or combination of types) can be used according to particular needs, desires, or particular implementations of the computer 702 and the described functionality. While memory 707 is illustrated as an internal component of the computer 702, in alternative implementations, memory 707 can be external to the computer 702.

The application 708 can be an algorithmic software engine providing functionality according to particular needs, desires, or particular implementations of the computer 702 and the described functionality. For example, application 708 can serve as one or more components, modules, or applications. Further, although illustrated as a single application 708, the application 708 can be implemented as multiple applications 708 on the computer 702. In addition, although illustrated as internal to the computer 702, in alternative implementations, the application 708 can be external to the computer 702.

The computer 702 can also include a power supply 714. The power supply 714 can include a rechargeable or non-rechargeable battery that can be configured to be either user- or non-user-replaceable. In some implementations, the power supply 714 can include power-conversion and management circuits, including recharging, standby, and power management functionalities. In some implementations, the power-supply 714 can include a power plug to allow the computer 702 to be plugged into a wall socket or a power source to, for example, power the computer 702 or recharge a rechargeable battery.

There can be any number of computers 702 associated with, or external to, a computer system containing computer 702, with each computer 702 communicating over network 730. Further, the terms "client," "user," and other appropriate terminology can be used interchangeably, as appropriate, without departing from the scope of the present disclosure. Moreover, the present disclosure contemplates that many users can use one computer 702 and one user can use multiple computers 702.

Described implementations of the subject matter can include one or more features, alone or in combination.

Additionally, in some implementations, the data can be collected at regular intervals (e.g., or continually) and curated into a remote operations center, and loaded to a database with spatial and temporal indexing capabilities. As one example, the data may be analyzed as it is collected for unload begin and end signals, and then, in combination with the location and time information, and the data records, determine which product transport container (e.g., grain cart or trailer) was positioned at a location at that time given known equipment dimensions and characteristics. In this example, once a match is identified, a "Virtual Load" record may be created or extended for the equipment receiving the load that contains pre-determined load metrics and characteristics, such as weight, volume, load time, condition of the product, and much more. As an example, this collection and curation of the data can be done automatically based on the load signals, location, and time match without need for operator intervention. Further, if the target transport container, such as a cart, already contains one or more portions of another load at the time of collection, the load quality information for all of the contained, partially filled loads can be aggregated together as appropriate for the circumstances.

The word "exemplary" is used herein to mean serving as an example, instance or illustration. Any aspect or design described herein as "exemplary" is not necessarily to be construed as advantageous over other aspects or designs. Rather, use of the word exemplary is intended to present concepts in a concrete fashion. As used in this application, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Further, at least one of A and B and/or the like generally means A or B or both A and B. In addition, the articles "a" and "an" as used in this application and the appended claims may generally be construed to mean "one or more" unless specified otherwise or clear from context to be directed to a singular form.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

Also, although the disclosure has been shown and described with respect to one or more implementations, equivalent alterations and modifications will occur to others skilled in the art based upon a reading and understanding of this specification and the annexed drawings. The disclosure includes all such modifications and alterations and is limited only by the scope of the following claims. In particular regard to the various functions performed by the above described components (e.g., elements, resources, etc.), the terms used to describe such components are intended to correspond, unless otherwise indicated, to any component which performs the specified function of the described component (e.g., that is functionally equivalent), even though not structurally equivalent to the disclosed structure which performs the function in the herein illustrated exemplary implementations of the disclosure. In addition, while a particular feature of the disclosure may have been disclosed with respect to only one of several implementations, such feature may be combined with one or more other features of the other implementations as may be desired and advantageous for any given or particular application. Furthermore, to the extent that the terms "includes," "having," "has," "with," or variants thereof are used in either the detailed description or the claims, such terms are intended to be inclusive in a manner similar to the term "comprising."

The implementations have been described, hereinabove. It will be apparent to those skilled in the art that the above methods and apparatuses may incorporate changes and modifications without departing from the general scope of this invention. It is intended to include all such modifications and alterations in so far as they come within the scope of the appended claims or the equivalents thereof.

## Claims

1. A method for automatically filling a target container to a desired weight during collection or depositing of an agricultural product, comprising
identifying a second predetermined level of product for a target truck-trailer container, or for a target dispersion vehicle;
determining an optimized fill method for transferring the product either from a field to the target truck-trailer container, or from the target truck-trailer container to the dispersion vehicle, using a mobile transport container;
using a sensor array, which detects an amount of the product disposed in the mobile transport container during transfer, to fill the mobile transport container to a first predetermined level based at least on the optimized fill method; and
using the mobile transport container to fill the target truck-trailer container or the target dispersion vehicle to the second predetermined level of product for a target truck-trailer container.

2. The method of claim 1, wherein the target amount and the first predetermined level comprise a weight and/or a volume.

3. The method of claim 1, wherein identifying the second predetermined level comprises identifying a pre-determined high-load weight specified for the target truck-trailer container, and/or identifying a pre-determined high-load weight for a combined product and the target truck-trailer container specified for a pre-determined travel route for hauling the product offsite.

4. The method of claim 1, wherein determining an optimized fill method for transferring the product comprises determining an efficient fill method from a group comprising:
optimizing a fill-weight for a target mobile transport container, wherein the optimized fill weight is multiplied by a whole number equivalent to a number of target mobile transport container loads to reach the target amount of product for the target truck-trailer container or target dispersion vehicle;
making the first predetermined level equivalent to a high level for the mobile transport container, and identifying a number of full loads needed to fill the target truck-trailer container or target dispersion vehicle to equal to or less than full, and identifying an amount of a partial load of the mobile transport container to complete filling the target truck-trailer container or target dispersion vehicle; and
monitor weight of the target truck-trailer container or target dispersion vehicle at least until less than a first predetermined level for the target mobile transport container load is needed to reach the target amount of product for a target truck-trailer container or target dispersion vehicle, and filling the target mobile transport container to a second predetermined level for the target mobile transport container equivalent to an amount of product needed to reach the target amount of product for a target truck-trailer container or target dispersion vehicle.

5. The method of claim 1, using the sensor array comprising using one or more of:
a scale that detects weight of the product; and
a volumetric detector that identifies a fill level of the product.

6. The method of claim 1, comprising determining a flow rate of product transferred to the mobile transport container based at least on the detected amount of product disposed in the mobile transport container, and wherein the sensor array detects the flow rate of the product during transfer to fill the mobile transport container to the first predetermined level, and wherein the detected flow rate is received by a harvester from which the product is being transferred.

7. The method of claim 1, comprising identifying one or more characteristics of the product being transferred to the mobile transport container, the characteristics comprising moisture level, kernel weight, and kernel size, and using the one or more characteristics in combination with the sensor array to fill the mobile transport container to a first predetermined level.

8. The method of claim 1, comprising determining the first predetermined level based at least on a combined weight of the mobile transport container and the product disposed in the mobile transport container, and wherein determining the first predetermined level is based at least on soil conditions at a target site where product transfer occurs.

9. The method of claim 1, comprising providing an alert to an operator that the first predetermined level has been achieved.

10. The method of claim 1, comprising calibrating the first predetermined level using a scale disposed on the mobile transport container.

11. A system for automatically filling a target container to a desired weight during collection of an agricultural product, comprising
a processor that processes stored instructions; and
non-transient memory on which programmed instructions are stored, which when executed by the processor perform at least the following:
identify a second predetermined level of product for a target truck-trailer container for hauling the product offsite;
determine an optimized fill method for transferring the product from a field from which the product is collected to the target truck-trailer container using a mobile transport container;
use a sensor array, which detects an amount of the product disposed in the mobile transport container during transfer, to fill the mobile transport container to a first predetermined level based at least on the optimized fill method; and
use the mobile transport container to fill the target truck-trailer container to the second predetermined level of product for a target truck-trailer container.

12. The system of claim 11, wherein identifying the second predetermined level comprises identifying a pre-determined high-load weight specified for the target truck-trailer container, and/or identifying a pre-determined high-load weight for a combined product and the target truck-trailer container specified for a pre-determined travel route for hauling the product offsite

13. The system of claim 11, wherein determining an optimized fill method for transferring the product from a field comprises determining an efficient fill method from a group comprising:
optimizing a fill-weight for a target mobile transport container, wherein the optimized fill weight is multiplied by a whole number equivalent to a number of target mobile transport container loads to reach the target amount of product for the target truck-trailer container;
making the first predetermined level equivalent to a high level for the mobile transport container, and identifying a number of full loads needed to fill the target truck-trailer container to equal to or less than full, and identifying an amount of a partial load of the mobile transport container to complete filling the target truck-trailer container; and
monitor weight of the target truck-trailer container at least until less than a first predetermined level for the target mobile transport container load is needed to reach the target amount of product for a target truck-trailer container, and filling the target mobile transport container to a second predetermined level for the target mobile transport container equivalent to an amount of product needed to reach the target amount of product for a target truck-trailer container.

14. The system of claim 11, wherein the stored programmed instructions when executed by the processor further perform the following: determine a flow rate of product transferred to the mobile transport container based at least on the detected amount of product disposed in the mobile transport container, and wherein the sensor array detects the flow rate of the product during transfer to fill the mobile transport container to the first predetermined level.

15. The system of claim 11, wherein the stored programmed instructions when executed by the processor further perform the following:
identifies one or more characteristics of the product being transferred to the mobile transport container, the characteristics comprising moisture level, kernel weight, and kernel size; and
use the one or more characteristics in combination with the sensor array to fill the mobile transport container to a first predetermined level.

## Amended claims

### Amended claims in accordance with Rule 137(2) EPC.

1. A method for automatically filling a target container to a desired weight during collection or depositing of an agricultural product (150), comprising
identifying a second predetermined level of product for a target truck-trailer container (300), or for a target dispersion vehicle;
determining an optimized fill method for transferring the product either from a field to the target truck-trailer container (300), or from the target truck-trailer container (300) to the target dispersion vehicle, using a mobile transport container (202);
using a sensor array, which detects an amount of the product disposed in the mobile transport container (202) during transfer, to fill the mobile transport container (202) to a first predetermined level based at least on the optimized fill method; and
using the mobile transport container (202) to fill the target truck-trailer container (300) or the target dispersion vehicle to the second predetermined level of product for the target truck-trailer container (300) or the target dispersion vehicle;
**characterized in that** determining the optimized fill method for transferring the product comprises optimizing a fill-weight for the mobile transport container (202), wherein the optimized fill weight is multiplied by an integer number equivalent to a number of target mobile transport container (202) loads to reach the second predetermined level of product for the target truck-trailer container (300) or target dispersion vehicle.

2. The method of claim 1, wherein identifying the second predetermined level comprises identifying a pre-determined high-load weight specified for the target truck-trailer container (300), and/or identifying a pre-determined high-load weight for a combined product and the target truck-trailer container (300) specified for a pre-determined travel route for hauling the product offsite.

3. The method of claim 1, using the sensor array comprising using one or more of:
a scale that detects weight of the product; and
a volumetric detector that identifies a fill level of the product.

4. The method of claim 1, comprising determining a flow rate of product transferred to the mobile transport container (202) based at least on the detected amount of product disposed in the mobile transport container (202), and wherein the sensor array detects the flow rate of the product during transfer to fill the mobile transport container (202) to the first predetermined level, and wherein the detected flow rate is received by a harvester from which the product is being transferred.

5. The method of claim 1, comprising identifying one or more characteristics of the product being transferred to the mobile transport container (202), the characteristics comprising moisture level, kernel weight, and kernel size, and using the one or more characteristics in combination with the sensor array to fill the mobile transport container (202) to the first predetermined level.

6. The method of claim 1, comprising determining the first predetermined level based at least on a combined weight of the mobile transport container (202) and the product disposed in the mobile transport container (202), and wherein determining the first predetermined level is based at least on soil conditions at a target site where product transfer occurs.

7. The method of claim 1, comprising providing an alert to an operator that the first predetermined level has been achieved.

8. The method of claim 1, comprising calibrating the first predetermined level using a scale disposed on the mobile transport container (202).
